(19) Europäisches Patentamt
European Patent Office
Office européen des brevets

(11) EP 3 882 677 A1

(12) EUROPEAN PATENT APPLICATION
published in accordance with Art. 153(4) EPC

(43) Date of publication:
22.09.2021 Bulletin 2021/38

(51) Int Cl.:
G02B 6/32 (2006.01)     G02B 6/02 (2006.01)

(21) Application number: 19884330.2

(22) Date of filing: 30.09.2019

(86) International application number:
PCT/JP2019/038483

(87) International publication number:
WO 2020/100452 (22.05.2020 Gazette 2020/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.11.2018 JP 2018215257

(71) Applicant: Toyo Seikan Group Holdings, Ltd.
Shinagawa-ku
Tokyo 141-8627 (JP)

(72) Inventors:
• MARUYAMA, Naohumi
Tokyo 141-0022 (JP)
• MISU, Naoki
Tokyo 141-8627 (JP)
• SAITOH, Toshihide
Tokyo 141-8627 (JP)

(74) Representative: Rutz, Andrea
Isler & Pedrazzini AG
Giesshübelstrasse 45
Postfach 1772
8027 Zürich (CH)

(54) **CONNECTION STRUCTURE FOR LENS-ATTACHED OPTICAL FIBERS AND METHOD FOR SETTING RADIUS OF CURVATURE OF END SURFACE OF LENS-ATTACHED OPTICAL FIBER**

(57)    According to the present invention, provided is a connection structure for lensed optical fibers, which is configured to establish PC connection of lensed optical fibers (1) each including an optical fiber (2) and a GRIN lens (3) that has a rod-like shape and is coaxially fused to a tip of the optical fiber, wherein each of the lensed optical fibers (1) includes an end surface (31) subjected to spherical polishing, and wherein the end surface (31) has a curvature radius (R) satisfying conditions expressed by the following relations (1) and (2):

$$(W/2a) \leq 1 \cdots (1);$$

and

$$a = (R \cdot F \cdot (3/4) \cdot (1 - v^2/E))^{1/3} \cdots (2),$$

where W represents a beam diameter, "a" represents a radius of a contact surface, F represents a pressing force at the time of PC connection, "v" represents a Poisson's ratio of the GRIN lens, and E represents a Young's modulus of the GRIN lens.

EP 3 882 677 A1

Fig. 1

(a)

(b)

# EP 3 882 677 A1

**Description**

Technical Field

The present invention relates to a connection structure for lensed optical fibers, and a method of setting a curvature radius of an end surface of a lensed optical fiber. More specifically, the present invention relates to a connection structure for lensed optical fibers, and a method of setting a curvature radius of an end surface of a lensed optical fiber, which are suitable for establishing physical contact (PC) connection between lensed optical fibers each including an optical fiber and a gradient index (GRIN) lens that has a rod-like shape and is coaxially fused to a tip of the optical fiber.

Background Art

As optical connectors configured to connect optical fibers that transmit an optical signal, there are known a single fiber coupling (SC) optical connector for a single fiber and a mechanically transferable (MT) optical connector for multiple fibers. When optical fibers are connected to each other by an optical connector, in order to reduce connection loss caused by Fresnel reflection, in general, there has been adopted physical contact (PC) connection in which end surfaces of the optical fibers are brought into abutment and physical contact with each other. For example, in the optical connector for a single fiber, such as the SC optical connector, spherical polishing is performed on the end surface of the optical fiber and also on an end surface of a ferrule mounted to the connector, and then the end surfaces of the optical fibers are brought into press contact with each other by pressing forces of pressing springs in the connector, thereby realizing PC connection. Normally, a spring having a pressing force of 10 newtons (N) is incorporated into the connector.

Further, when the optical fibers that transmit an optical signal are connected to each other in an optical communication network, in order to enable efficient connection with low loss, there has been known a lensed optical fiber (lensed fiber) including an optical fiber and a gradient index (GRIN) lens that has a rod-like shape and is coaxially fused to a tip of the optical fiber (see Patent Literature 1).

In the lensed optical fiber, the GRIN lens is formed to have the same diameter as that of the optical fiber. With this configuration, the optical connectors can also be applied to PC connection between the lensed optical fibers.

Citation List

Patent Literature

[Patent Literature 1] JP 2003-227963 A

Summary of Invention

Technical Problem

Incidentally, in recent years, the number and density of optical fibers are being increased, and hence the number of the optical fibers to be connected together by a single connector is being increased. When the number of the optical fibers to be connected together by a single connector is increased while spring forces (pressing forces) for establishing PC connection of the respective optical fibers are unchanged, a total of the spring forces in the connector is increased. As a result, there is a fear in that the total of the spring forces is excessively larger than material strength of the connector. Moreover, in a backplane optical connector configured to optically connect a large number of connectors to each other at a time, there is a fear in that a backplane is bent or damaged due to strong spring forces.

Meanwhile, when the number of the optical fibers to be connected together by a single connector is increased while the total of the spring forces in the connector is suppressed, the spring force for one optical fiber is reduced. When the spring forces for establishing PC connection of the optical fibers are reduced, there is reduced a diameter of a contact surface at which the optical fibers are brought into press contact with each other through PC connection. As a result, particularly in the lensed optical fiber in which a beam emitted from a core of the optical fiber is increased in diameter by the GRIN lens, there is a fear in that a beam diameter is larger than a diameter of the contact surface so that connection loss caused by, for example, Fresnel reflection is increased.

Therefore, it is an object of the present invention to provide a connection structure for lensed optical fibers and a method of setting a curvature radius of an end surface of a lensed optical fiber, which are capable of suppressing increase in pressing force at the time of PC connection while suppressing increase in connection loss at the time of the PC connection.

According to the present invention, there is provided a connection structure for lensed optical fibers, which is configured to establish PC connection of lensed optical fibers each including an optical fiber and a GRIN lens that has a rod-like shape and is coaxially fused to a tip of the optical fiber, wherein each of the lensed optical fibers includes an end surface subjected to spherical polishing, and wherein the end surface has a curvature radius (R) satisfying conditions expressed by the following relations (1) and (2):

$$(W/2a) \leq 1 \cdots (1);$$

and

$$a = (R \cdot F \cdot (3/4) \cdot (1 - v^2/E))^{1/3} \cdots (2),$$

where "a" represents a radius of a contact surface obtained when the lensed optical fibers are brought into press contact with and establish PC connection to each other,
W represents a beam diameter in a plane containing the contact surface,
F represents a pressing force at the time of PC connection per pair of lensed optical fibers,
"v" represents a Poisson's ratio of the GRIN lens, and
E represents a Young's modulus of the GRIN lens.

According to the present invention, there is provided a method of setting a curvature radius of an end surface of a lensed optical fiber including an optical fiber and a GRIN lens that has a rod-like shape and is coaxially fused to a tip of the optical fiber, the end surface being subjected to spherical polishing, the method including setting a curvature radius (R) of the end surface so as to satisfy conditions expressed by the following relations (1) and (2):

$$(W/2a) \leq 1 \cdots (1);$$

and

$$a = (R \cdot F \cdot (3/4) \cdot (1 - v^2/E))^{1/3} \cdots (2),$$

where "a" represents a radius of a contact surface obtained when the lensed optical fibers are brought into press contact with and establish PC connection to each other,
W represents a beam diameter in a plane containing the contact surface,
F represents a pressing force at the time of PC connection per pair of lensed optical fibers,
"v" represents a Poisson's ratio of the GRIN lens, and
E represents a Young's modulus of the GRIN lens.

Advantageous Effects of Invention

According to the connection structure for lensed optical fibers of the present invention, in the present invention, the curvature radius R of the end surface of the lensed optical fiber satisfies the conditions expressed by the relation (1) and the relation (2) described above. With this structure, increase in pressing force at the time of PC connection can be suppressed while increase in connection loss at the time of the PC connection is suppressed.

Further, according to the method of setting the curvature radius of the end surface of the lensed optical fiber of the present invention, the curvature radius R of the end surface of the lensed optical fiber is set so as to satisfy the conditions expressed by the relation (1) and the relation (2) described above. Through this setting, increase in pressing force at the time of PC connection can be suppressed while increase in connection loss at the time of the PC connection is suppressed.

Brief Description of Drawings

FIG. 1(a) is a schematic view for illustrating an unconnected state in an example of a connection structure for lensed optical fibers according to an embodiment of the present invention.

FIG. 1(b) is a schematic view for illustrating a PC connection state in the example of the connection structure for lensed optical fibers according to the embodiment of the present invention.

FIG. 2 is a schematic view for illustrating press-contact deformation of end surfaces of GRIN lenses of lensed optical fibers at the time of PC connection.

FIG. 3 is a graph for showing relationships with waveguide occupancy in an end surface of the lensed optical fiber.

Description of Embodiments

Now, an embodiment of the present invention is described with reference to the drawings.

A connection structure for lensed optical fibers according to this embodiment is configured to establish PC connection of lensed optical fibers 1 each including an optical fiber 2 and a GRIN lens 3 that has a rod-like shape and is coaxially fused to a tip of the optical fiber 2.

In this embodiment, in order to establish PC connection of the lensed optical fibers 1 to each other, the GRIN lens 3 to be fused to the tip of the optical fiber 2 is formed to have the same diameter (for example, 125 $\mu$m) as that of the optical fiber 2, thereby being capable of using publicly-known optical connectors such as an SC optical connector and an MT optical connector.

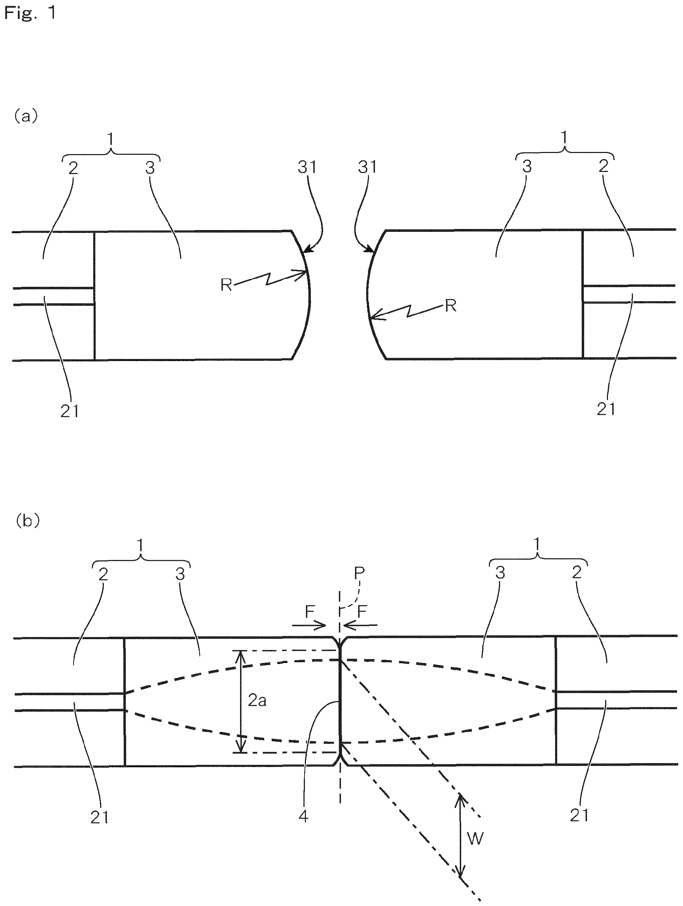

Here, FIG. 1(a) and FIG. 1(b) are schematic views for illustrating an example of establishing PC connection of the lensed optical fibers 1 to each other by bringing end surfaces of the lensed optical fibers 1 into press contact with each other by springs in an optical connector. In FIG. 1(a) and FIG. 1(b), an illustration of the optical connector is omitted, and the pair of lensed optical fibers 1 are mainly illustrated. FIG. 1(a) is an illustration of a state before connection, and FIG. 1(b) is an illustration of a connection state.

In the lensed optical fiber 1, for example, a length of the GRIN lens 3 is set to one-fourth of an incident light wavelength. With this configuration, light entering the GRIN lens 3 through a core 21 of the optical fiber 2 can be increased in diameter, and can be emitted as parallel light from a contact surface 4 between the GRIN lenses 3. In FIG. 1(b), the chain lines indicate a light beam that is propagated in one of the GRIN lenses 3, is emitted from the one of the GRIN lenses 3 so as to enter another one of the GRIN lenses 3 in a plane containing the contact surface 4, and is propagated in the another one of the GRIN lenses 3.

In PC connection between the lensed optical fibers 1 described above, a beam diameter W of the light beam in the contact surface 4 is larger than a diameter of the core 21 of the optical fiber 2. As a result, the following advantages are obtained.

(1) Even when a foreign matter such as dust is caught in the contact surface 4, connection loss can be reduced.
(2) In high-power transmission, energy density of the light in the contact surface 4 can be reduced. Thus, occurrence of burns can be suppressed.

Moreover, when the light beam is caused to pass through the contact surface 4 as the parallel light increased in beam diameter, loss caused by misalignment such as axial misalignment or angular misalignment is reduced, thereby enabling efficient PC connection with low loss.

In this embodiment, the GRIN lens 3 includes, for example, a graded index (GI) optical fiber in addition to a gradient index lens without a cladding. Types of lenses are not particularly limited as long as the lenses exert a lens function based on a gradient index profile.

Further, the length of the GRIN lens 3 to be fused to the tip of the optical fiber 2 is not limited to the example described above. In order to obtain desired output characteristics, the length of the GRIN lens 3 can be adjusted as appropriate in accordance with, for example, the gradient index profile and a numerical aperture of the GRIN lens 3. Moreover, in order to adjust the output characteristics of the GRIN lens 3, two or more types of lenses, which are different from each other in numerical aperture, may be joined and integrated with each other. A specific mode of the GRIN lens 3 is not particularly limited.

Incidentally, in order to reduce connection loss caused by Fresnel reflection at the time of PC connection, it is required that all the light beam increased in diameter be caused to pass through one of the GRIN lenses 3 into another one of the GRIN lenses 3 in the contact surface 4. In order to achieve this, it is required to satisfy a condition in which, in a plane containing the contact surface 4, a circular cross-sectional area $S1=((W/2)^2 \times \pi)$ of the light beam having the beam diameter (diameter) W is smaller than an area $S2=(a^2 \times \pi)$ of the circular contact surface 4 having a diameter 2a. In PC connection, the circular light beam and the contact surface 4 are substantially concentric with each other on the contact surface 4. Thus, this condition is given by the following relation (A).

$$((W/2)^2 \times \pi)/(a^2 \times \pi)=(W/2a)^2 \leq 1 \cdots (A)$$

Moreover, both of the beam diameter (diameter) W and the diameter 2a of the contact surface 4 are positive values. Thus, the relation (A) described above is expressed by the following relation (1).

$$(W/2a) \leq 1 \quad \cdots (1)$$

The beam diameter W in a plane P containing the contact surface 4 in the relation (1) described above can be set as appropriate in accordance with, for example, the gradient index profile and the numerical aperture of the GRIN lens 3 as described above.

Meanwhile, a radius "a" of the contact surface 4 in the relation (1) described above, which is a radius of the contact surface 4 when the lensed optical fibers 1 are brought into press contact with and establish PC connection to each other, can be obtained as described below.

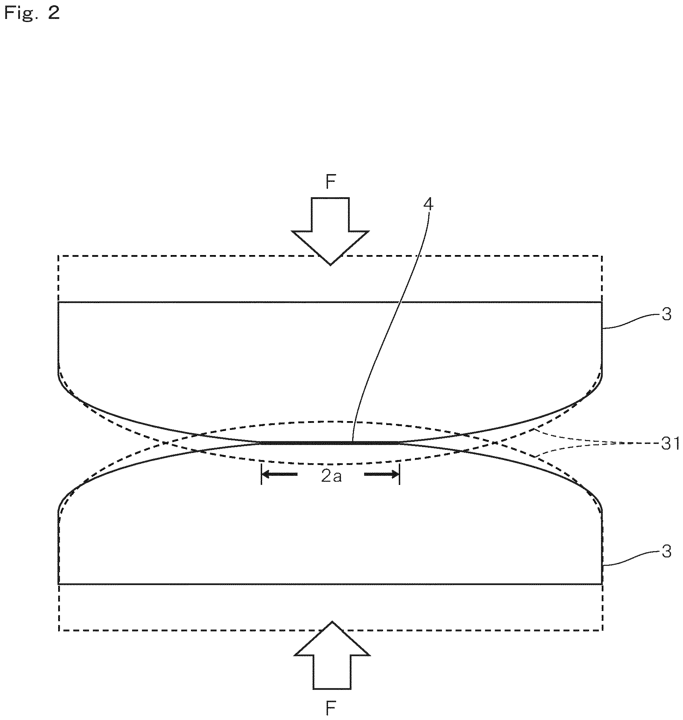

Here, FIG. 2 is a schematic illustration of press-contact deformation of end surfaces 31 of the GRIN lenses 3 of the lensed optical fibers that establish PC connection to each other. In FIG. 2, contours before PC connection are indicated by the broken lines, and contours in a PC connection state are indicated by the solid lines. Further, for ease of understanding of the drawing, the contact surface 4 at the time of PC connection is indicated by the thick line.

The PC connection, in which the end surfaces 31 of the pair of lensed optical fibers 1 subjected to spherical polishing are brought into abutment against each other, can be assumed as spherical contact in which spheres are substantially brought into press contact with each other. Accordingly, the radius "a" of the contact surface obtained when the lensed optical fibers 1 establish PC connection to each other is given by the following relation (2) as a case in which spheres have the same curvature radius R, the same Poisson's ratio "v", and the same Young's modulus E in the Hertzian formula.

$$a = (R \cdot F \cdot (3/4) \cdot (1 - v^2/E))^{1/3} \quad \cdots (2)$$

Here, in the relation (2) described above,

R represents a curvature radius of the end surface 31 of the lensed optical fiber 1 before PC connection,
F represents a pressing force at the time of PC connection per pair of lensed optical fibers 1,
"v" represents a Poisson's ratio of the GRIN lens 3, and
E represents a Young's modulus of the GRIN lens 3.

The pressing force F in the relation (2) described above is given by a pressing spring (not shown) in a connector to which the lensed optical fibers 1 are mounted.

As expressed by the relation (2) described above, the radius "a" of the contact surface 4 is proportional to one-third power of the product of the curvature radius R and the pressing force F. That is, it is understood that when the curvature radius R is increased, the pressing force F can be reduced without reducing the radius "a" of the contact surface 4.

Therefore, when the curvature radius R is set so that the radius "a" of the contact surface 4 satisfies the relation (1) described above, increase in pressing force at the time of PC connection can be suppressed while increase in connection loss at the time of the PC connection is suppressed.

Here, in Table 1, there are shown calculation results of waveguide occupancy (%), which vary in accordance with the curvature radii R (mm) when a spring force F=10 N, 5 N, 4 N, and 3 N. The spring force F refers to a pressing force per pair of lensed optical fibers when the beam diameter W=45 μm.

The waveguide occupancy (%) is a value of $((W/2)^2 \times \pi)/(a^2 \times \pi)$ expressed in the relation (A) described above.

Further, for calculation, the Poisson's ratio "v" of the GRIN lens 3 is set to 0.17, and the Young's modulus E thereof is set to 72.

[Table 1]

| Curvature radius R (mm) | Waveguide occupancy (%) | | | |
|---|---|---|---|---|
| | Spring 10N | Spring 5N | Spring 4N | Spring 3N |
| 1 | 122.2 | 194.0 | 225.1 | 272.7 |
| 2 | 77.0 | 122.2 | 141.8 | 171.8 |
| 3 | 58.8 | 93.3 | 108.2 | 131.1 |

(continued)

| Curvature radius R (mm) | Waveguide occupancy (%) | | | |
|---|---|---|---|---|
| | Spring 10N | Spring 5N | Spring 4N | Spring 3N |
| 4 | 48.5 | 77.0 | 89.3 | 108.2 |
| 5 | 41.8 | 66.4 | 77.0 | 93.3 |
| 6 | 37.0 | 58.8 | 68.2 | 82.6 |
| 7 | 33.4 | 53.0 | 61.5 | 74.5 |
| 8 | 30.6 | 48.5 | 56.3 | 68.2 |
| 9 | 28.2 | 44.8 | 52.0 | 63.0 |
| 10 | 26.3 | 41.8 | 48.5 | 58.8 |
| 11 | 24.7 | 39.2 | 45.5 | 55.1 |
| 12 | 23.3 | 37.0 | 43.0 | 52.0 |
| 13 | 22.1 | 35.1 | 40.7 | 49.3 |
| 14 | 21.0 | 33.4 | 38.8 | 47.0 |
| 15 | 20.1 | 31.9 | 37.0 | 44.8 |
| 16 | 19.2 | 30.6 | 35.5 | 43.0 |
| 17 | 18.5 | 29.3 | 34.1 | 41.3 |
| 18 | 17.8 | 28.2 | 32.8 | 39.7 |
| 19 | 17.2 | 27.2 | 31.6 | 38.3 |
| 20 | 16.6 | 26.3 | 30.6 | 37.0 |

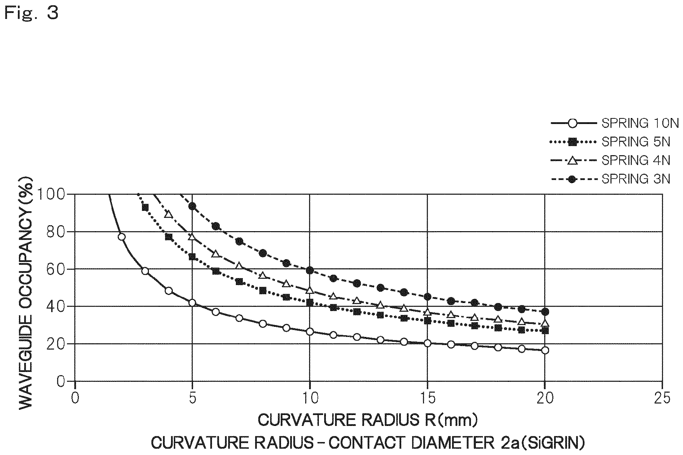

Moreover, FIG. 3 is a graph in which the calculation results shown in Table 1 described above are plotted. In the graph of FIG. 3, calculated values when the spring force F=10 N, 5 N, 4 N, and 3 N are plotted by open circles, solid squares, open triangles, and solid circles for the respective spring forces F.

In the graph of FIG. 3, there is omitted a graphic representation of a region in which the waveguide occupancy exceeds 100%.

From Table 1 described above and the graph of FIG. 3, the following is understood. Specifically,

when the spring force F=10 N and the curvature radius R=1 mm,
when the spring force F=5 N and the curvature radius R=1 mm and 2 mm,
when the spring force F=4 N and the curvature radius R=1 mm, 2 mm, and 3 mm, and
when the spring force F=3 N and the curvature radius R=1 mm, 2 mm, 3 mm, and 4 mm, the waveguide occupancy exceeds 100%. Accordingly, the conditions expressed by the relation (1) and the relation (2) described above are not satisfied, and the beam diameter W is larger than the diameter 2a of the contact surface 4. Thus, connection loss is increased.

Here, in Table 2, there are shown calculated values of the curvature radii R that satisfy a condition in which the waveguide occupancy is 100% when the spring force F=10 N, 5 N, 4 N, and 3 N. The spring force F refers to the pressing force per pair of lensed optical fibers.

[Table 2]

| Spring force F (N) | Curvature radius R when waveguide occupancy is 100% (mm) |
|---|---|
| 10 | 1.35 |
| 5 | 2.70 |
| 4 | 3.38 |
| 3 | 4.50 |

As shown in Table 2 described above, in a case in which the beam diameter W=45 μm, for example, when the spring force F=10 N, it is only required that the curvature radius R be equal to or larger than 1.35 mm. When the spring force F=5 N, it is required that the curvature radius R be equal to or larger than 2.70 mm. Therefore, in this embodiment, for example, when the spring force F is controlled to 5 N, it is only required that the curvature radius R of the end surface 31 of the GRIN lens 3 be set to 2.70 mm or more.

Further, for PC connection, it is required to form the end surface 31 of the GRIN lens 3 into not a flat surface but a spherical surface subjected to spherical polishing. Accordingly, the curvature radius R of the end surface 31 has a finite value.

The preferred embodiment of the present invention is described above, but the present invention is not limited to the embodiment described above. Various modifications can be made within the scope of the present invention.

For example, as a technology regarding spherical polishing for an optical connector, in general, the following method has been known. Specifically, under a state in which an optical fiber is inserted in a ferrule and fixed with an adhesive, spherical polishing is performed on a tip of the ferrule. In the present invention, when spherical polishing is performed on the end surface of the lensed optical fiber, the end surface of the lensed optical fiber may be subjected to spherical polishing together with a ferrule under a state of being inserted and fixed in the ferrule. Alternatively, the end surfaces of the lensed optical fibers may be brought into press contact with each other after each lensed optical fiber is held in a suitable jig in order to perform spherical polishing on the end surface of the lensed optical fiber, and then the polished lensed optical fiber is held in a ferrule. Further, the ferrule may be for a single fiber or for multiple fibers.

The documents described in the specification and the specification of Japanese application on the basis of which the present application claims Paris convention priority are incorporated herein by reference in its entirety.

Reference Signs List

1    lensed optical fiber
2    optical fiber
3    GRIN lens
4    contact surface
21    core
31    end surface

**Claims**

1.  A connection structure for lensed optical fibers, which is configured to establish PC connection of lensed optical fibers each including an optical fiber and a GRIN lens that has a rod-like shape and is coaxially fused to a tip of the optical fiber,

    wherein each of the lensed optical fibers includes an end surface subjected to spherical polishing, and
    wherein the end surface has a curvature radius (R) satisfying conditions expressed by the following relations (1) and (2):

    $$(W/2a) \leq 1 \cdots (1);$$

    and

    $$a = (R \cdot F \cdot (3/4) \cdot (1-v^2/E))^{1/3} \cdots (2),$$

    where "a" represents a radius of a contact surface obtained when the lensed optical fibers are brought into press contact with and establish PC connection to each other,
    W represents a beam diameter in a plane containing the contact surface,
    F represents a pressing force at the time of PC connection per pair of lensed optical fibers,
    "v" represents a Poisson's ratio of the GRIN lens, and
    E represents a Young's modulus of the GRIN lens.

2. A method of setting a curvature radius of an end surface of a lensed optical fiber including an optical fiber and a GRIN lens that has a rod-like shape and is coaxially fused to a tip of the optical fiber, the end surface being subjected to spherical polishing,

the method comprising setting a curvature radius (R) of the end surface so as to satisfy conditions expressed by the following relations (1) and (2):

$$(W/2a) \leq 1 \quad \cdots (1);$$

and

$$a = (R \cdot F \cdot (3/4) \cdot (1 - v^2/E))^{1/3} \quad \cdots (2),$$

where "a" represents a radius of a contact surface obtained when the lensed optical fibers are brought into press contact with and establish PC connection to each other,

W represents a beam diameter in a plane containing the contact surface,

F represents a pressing force at the time of PC connection per pair of lensed optical fibers,

"v" represents a Poisson's ratio of the GRIN lens, and

E represents a Young's modulus of the GRIN lens.

Fig. 1

(a)

(b)

Fig. 2

Fig. 3

CURVATURE RADIUS – CONTACT DIAMETER 2a(SiGRIN)

## INTERNATIONAL SEARCH REPORT

| International application No. |
|---|
| PCT/JP2019/038483 |

### A. CLASSIFICATION OF SUBJECT MATTER
Int.Cl. G02B6/32(2006.01)i, G02B6/02(2006.01)i

According to International Patent Classification (IPC) or to both national classification and IPC

### B. FIELDS SEARCHED

Minimum documentation searched (classification system followed by classification symbols)
Int.Cl. G02B6/32, G02B6/02

Documentation searched other than minimum documentation to the extent that such documents are included in the fields searched
    Published examined utility model applications of Japan      1922-1996
    Published unexamined utility model applications of Japan    1971-2019
    Registered utility model specifications of Japan            1996-2019
    Published registered utility model applications of Japan    1994-2019

Electronic data base consulted during the international search (name of data base and, where practicable, search terms used)
    JSTPlus/JST7580(JDreamIII), Science Direct, IEEE Xplore

### C. DOCUMENTS CONSIDERED TO BE RELEVANT

| Category* | Citation of document, with indication, where appropriate, of the relevant passages | Relevant to claim No. |
|---|---|---|
| Y | JP 2004-29450 A (NIPPON TELEGRAPH AND TELEPHONE CORPORATION) 29 January 2004, paragraphs [0015]-[0026], fig. 3, 4 (Family: none) | 1-2 |
| Y | JP 2016-184104 A (FUJIKURA LTD.) 20 October 2016, paragraph [0024], fig. 1 & US 2016/0282562 A1, paragraphs [0179]-[0187], fig. 1 | 1-2 |
| A | JP 7-174946 A (MATSUSHITA ELECTRIC INDUSTRIAL CO., LTD.) 14 July 1995, entire text, all drawings & US 5490227 A | 1-2 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11.11.2019 | 10.12.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 882 677 A1**

**INTERNATIONAL SEARCH REPORT**

| International application No. |
| --- |
| PCT/JP2019/038483 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 2002/0191918 A1 (MANNING, R. M. et al.) 19 December 2002, entire text, all drawings (Family: none) | 1-2 |
| A | SUZUKI, N. et al., Low insertion-and high return-loss optical connectors with spherically convex-polished end, Electronics Letters, 16 January 1986, vol. 22, no. 2, pp. 110-112 | 1-2 |
| A | 新宅敏宏、他，凸球面研磨光コネクタの接続安定性に関する考察，電子情報通信学会論文誌 C, vol. 70, no. 2, 25 February 1987, pp. 290-292, (SHINTAKU, Toshihiro et al., Study on connection stability of optical connectors with spherically convex-polished ends, IEICE Transactions on Electronics) | 1-2 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003227963 A